Europäisches Patentamt

European Patent Office

Office européen des brevets

(19)

(11) Veröffentlichungsnummer: **0 204 141**
**B1**

(12) **EUROPÄISCHE PATENTSCHRIFT**

(45) Veröffentlichungstag der Patentschrift: **19.09.90**

(21) Anmeldenummer: **86105862.6**

(22) Anmeldetag: **28.04.86**

(51) Int. Cl.$^5$: **C 08 G 18/12,** C 08 G 18/78, C 08 G 18/80, C 07 C 275/28, C 07 C 275/62

(54) **VERWENDUNG VON HARNSTOFF- UND/ODER BIURETGRUPPEN AUFWEISENDENPOLYISOCYANAT-ZUBEREITUNGEN ALS ISOCYANAT KOMPONENTE BEI DER HERSTELLUNG VON KUNSTSTOFFEN NACH DEM VERFAHREN DER REAKTIONSSPRITZGUSSTECHNIK.**

(30) Priorität: **09.05.85 DE 3516730**

(43) Veröffentlichungstag der Anmeldung:
**10.12.86 Patentblatt 86/50**

(45) Bekanntmachung des Hinweises auf die Patenterteilung:
**19.09.90 Patentblatt 90/38**

(84) Benannte Vertragsstaaten:
**BE DE FR GB IT NL SE**

(56) Entgegenhaltungen:
**DE-A-2 261 065**
**US-A-3 441 588**
**US-A-3 824 266**

(73) Patentinhaber: **BAYER AG**
**D-5090 Leverkusen 1 Bayerwerk (DE)**

(72) Erfinder: **Rasshofer, Werner, Dr.**
**Wolfskaul 10**
**D-5000 Köln 80 (DE)**
Erfinder: **Paul, Reiner, Dr.**
**Oberhausenerstrasse 55**
**D-4330 Mülheim-Ruhr (DE)**
Erfinder: **Seel, Klaus, Dr.**
**Märchenstrasse 72**
**D-5000 Köln 80 (DE)**
Erfinder: **Weber, Christian, Dr.**
**Paul-Klee-Strasse 68a**
**D-5090 Leverkusen (DE)**

Courier Press, Leamington Spa, England.

# EP 0 204 141 B1

**Beschreibung**

Die Erfindung betrifft die Verwendung von neuen, Harnstoff- und/oder Biuretgruppen aufweisenden Polyisocyanat-Zubereitungen, die durch Umsetzung von organischen Polyisocyanaten mit unterschüssigen Mengen an organischen Verbindungen mit gegenüber Isocyanatgruppen reaktionsfähigen Gruppen hergestellt worden sind, die zumindest zum Teil primäre oder sekundäre Aminogruppen darstellen, bei der Herstellung von Kunststoffen nach dem Isocyanat-Polyadditionsverfahren, insbesondere bei der Herstellung von Formkunststoffen nach der Reaktionsspritzgußtechnik.

Die Herstellung von urethanmodifizieren Polyisocyanat-Zubereitungen, d.h. von endständige Isocyanatgruppen aufweisenden Prepolymeren bzw. Semiprepolymeren, insbesondere auf Basis von Polyisocyanaten bzw. Polyisocyanatgemischen der Diphenylmethanreihe (4,4'-Diisocyanatodiphenylmethan, dessen Gemische mit 2,4'- und gegebenenfalls 2,2'-Diisocyanatodiphenylmethan oder Phosgenierungsprodukte von Anilin/Formaldehyd-Kondensaten, die neben diesen Diisocyanaten deren höhere Homologen enthalten) und den unterschiedlichen Polyhydroxylverbindungen ist bekannt (vgl. z.B. EP—A—10 850 oder 66 130; DE—OS—2 347 207, 2 404 166, 2 513 793, 2 513 796, 2 620 222, 2 622 104, 2 732 182, 2 737 338, 2 804 375, 2 810 596, 2 815 579 oder 2 913 126; US—PS—3 644 457, 4 055 548, 4 234 714 oder 4 321 333, sowie GB—PS—1 369 334).

Bei den Verfahren dieser Vorveröffentlichungen geht es im allgemeinen um die Verflüssigung von bei Raumteperatur festem Diisocyanatodiphenylmethan, insbesondere 4,4'-Diisocyanatodiphenylmethan oder um die Verminderung der Kristallisationsneigung von bei Raumtemperatur flüssigen Polyisocyanatgemischen der Diphenylmethanreihe während der Lagerung bei tiefen Temperaturen.

Bei der Prepolymerisierung bzw. Semiprepolymerisierung von Polyisocyanaten mit Polyolen müssen jedoch, was Struktur und Molekulargewicht dieser Polyole betrifft, zur Erreichung eines verflüssigenden Effekts einige Kompromisse eingegangen werden, so daß Polyhydroxylverbindungen, die in den aus den Polyisocyanat-Zubereitungen hergestellten Polyurethan-Kunststoffen die besten mechanischen Werte ergeben, oftmals zur Prepolymerisierung bzw. Semiprepolymerisierung nicht eingesetzt werden können. Von Nachteil ist auch vor allem, daß die in den Prepolymeren bzw. Semiprepolymeren vorliegenden Urethangruppen im Vergleich zu Harnstoff- oder Amidgruppen thermisch nur gering beanspruchbar sind, so daß die aus den Prepolymeren bzw. Semiprepolymeren hergestellten, vorwiegend Urethangruppen aufweisenden Kunststoffe bei erhöhten Temperaturen im allgemeinen schlechtere mechanische Eigenschaften aufweisen, als vergleichbare Kunststoffe, in denen anstelle der Urethangruppen oder zumindest anstelle eines Teils der Urethangruppen Harnstoffgruppen vorliegen.

Die Herstellung von Harnstoff- und/oder Biuretgruppen aufweisenden Polyisocyanat-Zubereitungen ist ebenfalls bekannt. So lehrt die DE—PS—1 215 365 die Herstellung von höhermolekularen Polyisocyanaten mit Biuretstruktur durch Umsetzung von mindestens 3 Mol eines organischen Diisocyanats mit 1 Mol eines ω,ω'-Diaminopolyethers vom durchschnittlichen Molekulargewicht 200 bis 6.000, dem gegebenenfalls eine kleine Menge eines entsprechenden ω,ω'-Dihydroxy- oder eines ω-Hydroxy-ω'-amino-polyethers beigemischt sein kann. In der GB—PS—1 078 390 wird die Herstellung von flüssigen Polyisocyanat-Kompositionen durch Erhitzen eines organischen Diisocyanats mit einer Lösung eines aromatische Diamins in einem organischen Solvens auf 150 bis 200°C während 1 bis 4 h beschrieben.

Isocyanatkompositionen, die neben Biuret- und Harnstoffgruppen noch Urethangruppen aufweisen, können auch durch Reaktion von Mischungen aus Ketonen und Di- bzw. Polyaminen mit Di- bzw. Polyisocyanaten gemäß GB—PS—1 263 609 erhalten werden. Flüssige, diprimäre aromatische Diamine, deren Reaktivität gegenüber Isocyanaten durch elektrophile oder sterisch hindernde Substituenten vermindert ist, werden nach DE—OS—1 963 190 mit Polyisocyanaten zur stabilen, flüssigen, Biuretgruppen aufweisenden Polyisocyanaten umgesetzt. Nach DE—OS—2 010 887 werden Amine mit sekundären Aminogruppen und Polyisocyanate zur Herstellung von flüssigen Biuretgruppen aufweisenden Polyisocyanaten bei 80 bis 200°C miteinander umgesetzt: nach DE—OS—2 032 547 entstehen aus diesen Ausgangskomponenten bei einer Temperatur von −20 bis +80°C flüssige, Harnstoffgruppen enthaltende Isocyanate. Die DE—OS—2 261 065 beschreibt die Umsetzung von organischen Polyisocyanaten mit unterschüssigen Mengen an aliphatischen oder cycloaliphatischen Diaminen zu den entsprechenden Biuretgruppen aufweisenden Polyisocyanaten. Gemäß DE—OS—3 003 543 werden Harnstoff-modifizierte Polyisocyanate durch Umsetzung von einfachen Polyisocyanaten mit unterschüssigen Mengen an Polyaminen mit mehr als drei nicht aromatisch gebundenen Aminogruppen erhalten. Gemäß DE—OS—3 114 638 werden spezielle Diisocyanate und/oder Diamine mit aromatisch gebundenen Isocyanat- bzw. Aminogruppen zur Herstellung von Harnstoff- und/oder Biuretgruppen aufweisen aromatischen Polyisocyanaten verwendet.

Die Verfahrensprodukte dieser Vorveröffentlichungen haben indessen insbesondere für die Herstellung von halbharten, gegebenenfalls geschäumten, elastomeren Formkunststoffen, wie sie nach der Reaktionsspritzgußtechnik erhalten werden können, keine Bedeutung erlangt. Der Grund hierfür ist in erster Linie im dem Umstand zu sehen, daß die zur Herstellung der Polyisocyanat-Zubereitungen bislang eingesetzten Diamine nicht den Diaminen bzw. Polyaminen entsprechen, die bislang mit gutem Erfolg für die Herstellung von hochwertigen Formkunststoffen nach der Reaktionsspritzgußtechnik als Reaktionspartner für organische Polyisocyanat verwendet worden sind.

2

## EP 0 204 141 B1

Jetzt wurde jedoch gefunden, daß Polyisocyanat-Zubereitungen auf Basis von organischen Polyisocyanaten und unterschüssigen Mengen an Gemischen aus bestimmten höhermolekularen Verbindungen mit gegenüber Isocyanatgruppen reaktionsfähigen Gruppe, insbesondere Aminogruppen mit bestimmten niedermolekularen Verbindungen mit gegenüber Isocyanatgruppen reaktionsfähigen Gruppen, insbesondere Aminogruppen ausgezeichnet als Isocyanatkomponente bei der Herstellung von Formkunststoffen auf Basis von Polyisocyanat-Additionsprodukten einer Dichte von 0,8 bis 1,4 g/cm$^3$ nach der Reaktionsspritzgußtechnik geeignet sind.

Gegenstand der Erfindung ist somit die Verwendung von Harnstoff- und/oder Biuretgruppen aufweisenden Polyisocyanat-Zubereitungen mit einem NCO-Gehalt von 0,7 bis 45 Gew.%, die durch Umsetzung von

A) organischen Polyisocyanaten mit einem NCO-Gehalt von 10 bis 50 Gew.-% oder Gemischen von organischen Polyisocyanaten mit einem NCO-Gehalt von 10 bis 50 Gew.-% mit

B) organischen Verbindungen mit gegenüber Isocyanatgruppen reaktionsfähigen Gruppen unter Einhaltung eines Äquivalentverhältnisses von Isocyanatgruppen der Komponente A) zu gegenüber Isocyanatgruppen reaktionsfähigen Gruppen der Komponente B) von 2:1 bis 100:1 hergestellt worden sind, wobei als Komponente B) Gemisch aus

a) organischen Verbindungen des (mittleren) Molekulargewichts von 500 bis 20.000 mit mindestens 2 gegenüber Isocyanatgruppen reaktionsfähigen Gruppen mit

b) organischen Verbindungen des Molekulargewichtsbereichs 60 bis 499 mit mindestens zwei gegenüber Isocyanatgruppen reaktionsfähigen Gruppen unter Einhaltung eines Äquivalentverhältnisses, bezogen auf die gegenüber Isocyanatgruppen reaktionsfähigen Gruppen, von a):b)=100:1 bis 0,1:1 verwendet worden sind,

wobei die Komponente a) aus im Sinne der Isocyanat-Additionsreaktion mindestens difunktionellen Polyethern oder Polyestern des Molekulargewichtsbereichs 500 bis 20.000 mit alkoholischen, an primäre und/oder sekundäre Kohlenstoffatome gebundenen Hydroxylgruppen und/oder mit aromatisch und/oder (cyclo)aliphatisch gebundenen, primären und/oder sekundären Aminogruppen oder aus Gemischen derartiger Verbindungen besteht, und

wobei die Komponente b) ausgewählt worden ist aus der Gruppe bestehend aus

b1) aromatischen Di- oder Triaminen des Molekulargewichts 108 bis 499 mit primären oder sekundären Amingruppen,

b2) (cyclo)aliphatischen Di- und/oder Triaminen des Molekulargewichtsbereichs 60 bis 499 mit primären und/oder sekundären Aminogruppen,

b3) organischen Verbindungen des Molekulargewichtsbereichs 61 bis 499, die im Sinne der Isocyanat-Additionsreaktion mindestens difunktionell sind und die sowohl (i) mindestens eine aromatisch und/oder (cyclo-aliphatisch gebundene primäre und/oder sekundäre Aminogruppe, als auch (ii) mindestens eine alkoholische, an ein primäres oder sekundäres Kohlenstoffatom gebundene Hydroxylgruppe aufweisen,

b4) mindestens zweiwertigen, gegebenenfalls Ether- oder Estergruppen aufweisenden Alkoholen des Molekulargewichtsbereichs 60 bis 499 und

b5) Gemischen der Verbindungen b1) bis b4),

mit der Maßgabe, daß mindestens 25% der in den Komponenten a) und b) vorliegenden, gegenüber Isocyanatgruppen reaktionsfähigen Gruppen primäre oder sekundäre Aminogruppen darstellen,

als Isocyanatkomponente bei der Herstellung von Formkunststoffen auf Basis von Polyisocyanat-Additionsprodukten einer Dichte von 0,8 bis 1,4 g/cm$^3$ nach der Reaktionsspritzgußtechnik.

Als Polyisocyanatkomponente können zur Herstellung der Zubereitungen beliebige organische Polyisocyanate mit einem NCO-Gehalt von 10 bis 50 Gew.-% bzw., beliebige Gemische derartiger organischer Polyisocyanate mit einem NCO-Gehalt von 10 bis 50 Gew.-% eingesetzt werden.

Vorzugsweise werden Polyisocyanate mit aromatisch gebundenen Isocyanatgruppen verwendet. Hierzu gehören beispielsweise 2,4-Diisocyanatotoluol, 2,6-Diisocyanatotoluol, 1,2-Bis-(4-isocyanatophenyl)-ethan, Alkyl-, insbesondere Methyl-substituierte Diisocyanatodiphenylmethane der beispeilsweise in EP—A—24 665 oder 46 556 beschriebenen Art und insbesondere Polyisocyanate bzw. Polyisocyanatgemische der Diphenylmethanreihe. Beliebige Gemische derartiger Polyisocyanate können beim erfindungsgemäßen Verfahren ebenfalls verwendet werden. Bei den besonders bevorzugt einzusetzenden Polyisocyanaten oder Polyisocyanat-Gemischen handelt es sich um solche der Diphenylmethanreihe wie 4,4'-Diisocyanatodiphenylmethan, dessen Gemische mit 2,4'- und gegebenenfalls 2,2'-Diisocyanatodiphenylmethan mit einem Gehalt, bezogen auf Gesamtgemisch, an 2,4'-Diisocyanatodiphenylmethan von bis zu 70 Gew.-%, vorzugsweise bis zu 20 Gew.-%, wobei der Gehalt an 2,2'-Diisocyanatodiphenylmethan im allgemeinen 5 Gew.-% nicht übersteigt, um Polyisocyanatgemische, wie sie durch Phosgenierung von Anilin/Formaldehyd-Kondensaten erhalten werden, und die neben Diisocyanatodiphenylmethan-Isomeren der genannten Art unterschiedliche Mengen an höheren homologen Polyisocyanaten (im allgemeinen 5 bis 60 Gew.-%, bezogen auf Gesamtgemisch) enthalten können oder um Urethangruppen aufweisende Umsetzungsprodukte der zuletzt genannten Di- und/oder Polyisocyanate mit unterschüssigen Mengen an aliphatischen Polyhydroxylverbindungen des Molekulargewichtsbereichs 62—700 wie z.B. Ethylenglykol, Trimethylolpropan, Propylenglykol, Dipropylenglykol oder Polypropylenglykolen des genanten Molekulargewichtsbereichs oder um durch

EP 0 204 141 B1

partielle Carbodiimidisierung der Isocyanatgruppen der zuletzt genannten Di- und/oder Polyisocyanate modifizierte Di- und/oder Polyisocyanate.

Zu den besonders bevorzugten Ausgangsmaterialien A) gehören z.B. die bei Raumtemperatur flüssigen Derivate des 4,4'-Diisocyanatodiphenylmethans, beispielsweise die Urethangruppen aufweisenden Polyisocyanate, die gemäß DE—PS—1 618 380 (US—PS—3 644 457) durch Umsetzung von 1 Mol 4,4'-Diisocyanatodiphenylmethan mit 0,05 bis 0,3 Molen an niedermolekularen Diolen oder Triolen, vorzugsweise Polypropylenglykolen mit einem unter 700 liegenden Molekulargewicht, zugänglich sind, oder die Carbodiimid- und/oder Uretonimingruppen aufweisende Diisocyanate auf Basis von 4,4'-Diisocyanatodiphenyllmethan, wie sie beispielsweise gemäß US—PS—3 152 162, US—PS—3 384 653, US—PS—3 449 256, DE—OS—2 537 685 oder EP—OS—5233 (US-Anmeldung 903 308) zugänglich sind. Auch die entsprechenden Modifizierungsprodukte auf Basis von Gemischen aus 2,4'- und 4,4'-Diisocyanatodiphenylmethan oder auch Gemisch der wie beschrieben modifizierten 4,4'-Diisocyanatodiphenylmethane mit untergeordneten Mengen an höher als difunktionellen Polyisocyanaten der Diphenylmethanreihe, beispielsweise solche der in DE—OS—2 624 526 beschriebenen Art gehören zu den besonders bevorzugten Polyisocyanaten. Im allgemeinen handelt es sich bei den bevorzugten, erfindungsgemäß einzusetzenden Polyisocyanaten um bei Raumtemperatur flüssige, gegebenenfalls wie beschrieben chemisch modifizierte Polyisocyanate bzw. Polyisocyanatgemische der Diphenylmethanreihe einer (mittleren) NCO-Funktionalität von 2—2,2, insbesondere von 2, in denen als Hauptkomponente (mehr als 50 Gew.-%) 4,4'-Diisocyanatodiphenylmethan vorliegt.

Gegebenenfalls werden als Polyisocyanate derartige Polyisocyanate bzw. Polyisocyanatgemische der Diphenylmethanreihe, gegebenenfalls in Abmischung mit bis zu 50 NCO-Äquivalentprozent, bezogen auf Gesamtgemisch, an anderen aromatischen Polyisocyanaten eingesetzt. Besonders bevorzugt werden jedoch die genannten Polyisocyanate bzw. Polyisocyanatgemisch der Diphenylmethanreihe als ausschließliche Polyisocyanat-Komponente beim erfindungsgemäßen Verfahren verwendet.

Bei den Verbindungen mit gegenüber Isocyanatgruppen reaktionsfähigen Gruppen (Komponente B) handelt es sich um Gemische aus a) bestimmten höhermolekularen Verbindungen mit gegenüber Isocyanatgruppen reaktionsfähigen Gruppen mit b) bestimmten niedermolekularen Verbindungen mit gegenüber Isocyanatgruppen reaktionsfähigen Gruppen, wobei in diesen Gemischen Komponenten a) und b) in, einem Äquivalentverhältnis der jeweiligen, gegenüber Isocyanatgruppen reaktionsfähigen Gruppen von a:b=100:1 bis 0,1:1, vorzugsweise 10:1 bis 0,2:1 entsprechenden Mengen vorliegen. In der Praxis bedeutet dies im allgemeinen, daß die Komponente B ca. zu 99 bis 50, vorzugsweise 97,5 bis 75 Gew.-% aus Verbindungen a) und zum Rest aus Verbindungen b) besteht. Art und Mengenverhältnisse der Komponenten a) und b) werden im übrigen so gewählt, daß die gegenüber Isocyanatgruppen reaktionsfähigen Gruppen der Komponente B mindestens zu 25%, vorzugsweise zumindest zu 50% und insbesondere zumindest zu 75% aus primären oder sekundären, insbesondere primären, Aminogruppen bestehen.

Bei der Komponente a) handelt es sich um Polyether oder Polyester des Molekulargewichtsbereichs 500 bsi 20.000, vorzugsweise 1.000 bis 7.000, die mindestens 2, vorzugsweise endständig angeordnete gegenüber Isocyanatgruppen reaktionsfähige Gruppen aufweisen. Bei diesen gegenüber Isocyanatgruppen reaktionsfähigen Gruppen handelt es sich um an primäre oder sekundäre Kohlenstoffatome gebundene alkoholische Hydroxylgruppen und/oder um aromatisch oder (cyclo)aliphatisch gebundene primäre oder sekundäre, vorzugsweise primäre Aminogruppen. Die genannten Molekulargewichte können beispielsweise dampfdruckosmometrisch bestimmt werden.

Als Komponente a) kommen somit die den gemachten Angaben entsprechenden, aus der Polyurethanchemie an sich bekannten Aminopolyether, Aminopolyester, Polyetherpolyole und/oder Polyesterpolyole oder deren Gemische in Betracht. Gut verwendbar sind selbstverständlich auch solche Polyether oder Polyester, die sowohl Amino- als auch Hydroxylgruppen aufweisen.

Als Komponente a) geeignete Polyetherpolyole kommen die aus der Polyurethanchemie an sich bekannten Alkoxylierungsprodukte von geeigneten Startermolekülen unter Verwendung von Ethylenoxid und/oder Propylenoxid in Betracht, wobei die genannten Alkylenoxide sowohl im Gemisch als auch sukzessive bei der Herstellung der Alkoxylierungsprodukte verwendet werden können. Geeignete Startermoleküle sind beispielsweise Wasser, einfache, mehrwertige Alkohole wie 1,2-Dihydroxyethan, 1,2-Dihydroxypropan, 1,3-Dihydroxypropan, 1,4-Dihydroxybutan, 1,6-Dihydroxyhexan, Trimethylolpropan, Glycerin, Pentaerythrit, Rohrzucker oder beliebige Gemische derartiger Startermoleküle, wobei bei der Verwendung von festen Startermolekülen wie z.B. Rohrzucker im allgemeinen gleichzeitig verflüssigende, niederfunktionelle Startermoleküle der beispielhaft genannten Art gleichzeitig mitverwendet werden.

Als Komponente a) geeignete Polyesterpolyole, kommen die aus der Polyurethanchemie an sich bekannten in Betracht, beispielsweise die Umsetzungsprodukte von mehrbasischen Carbonsäuren wie Adipinsäure, Phthalsäure, Tetrahydrophthalsäure und/oder Hexahydrophthalsäure mit überschüssigen Mengen an einfachen, mehrwertigen Alkoholen der zuletzt beispielhaft genannten Art.

Als Komponente a) geeignete Polyester oder Polyether, die als gegenüber Isocyanatgruppen reaktionsfähige Gruppen Aminogruppen der oben beispielhaft genannten Art neben gegebenenfalls ebenfalls vorliegenden Hydroxylgruppen aufweisen, kommen ebenfalls die aus der Polyurethanchemie an sich bekannten Verbindungen in Betracht. Zur Herstellung dieser Aminopolyether bzw. -polyester werden im allgemeinen Polyetherpolyole oder Polyesterpolyole der zuletzt beispielhaft genannten Art durch

4

zumindest teilweisen Ersatz der Hydroxylgruppen durch Aminogruppen chemisch modifiziert. Derartige Verfahren zur Herstellung von Aminopolyethern bzw. -estern sind beispielsweise in DE—AS—1 270 046 (Umsetzung der Ausgangspolyole mit überschüssigen Mengen an organischen Polyisocyanaten und anschließende Überführung der so eingeführten endständigen Isocyanatgruppen durch Reaktion mit sekundären oder tertiären Carbinolen und thermische Spaltung der resultierenden Urethane), DE—AS—1 694 152 (Umsetzung der zuletzt genannten NCO-Prepolymeren mit überschüssigen Mengen an organischen Diaminen), FR—PS—1 415 317 (Überführung der NCO-Gruppen der genannten NCO-Prepolymeren im Aminogruppen durch Reaktion mit Ameisensäure und anschließende Verseifung der N-Formylderivate), DE—AS—1 155 907 (Umsetzung der genannten NCO-Prepolymeren mit Sulfaminsäure) beschrieben. Gut geeignet sind auch die Verfahrensprodukte der DE—AS—1 215 373, der BE—PS—634 741 oder der US—PS—3 654 370, d.h. die Umsetzungsprodukte von Polyetherpolyolen oder Polyesterpolyolen mit Ammoniak in Gegenwart von Katalysatoren und gegebenenfalls Wasserstoff. Weitere Verfahren zur Herstellung von erfindungsgemäß als Komponente a) geeigneten Aminopolyethern oder -polyester sind beispielsweise in den Deutschen Offenlegungsschriften 2 948 419, 30 39 600, 31 12 118, 31 31 252, 32 00 021, 31 44 991, 31 44 874, 32 23 395, 32 23 400, 2 546 536, 2 019 432, 2 619 840, 2 648 774, 2 648 825, 30 35 639, den US-Patentschriften 3 044 989, 3 865 791, 4 180 644, 2 888 439 oder der Deutschen Auslegeschrift 1 193 671 beschrieben.

Besonders bevorzugt werden als Komponente a) Aminopolyester und insbesondere Aminopolyether eingesetzt, die durch thermische Spaltung von Carbamaten gemäß DE—OS—3 132 252 oder durch Druckaminierung von Polyolen gemäß den obengenannten Veröffentlichungen hergestellt worden sind. Diese bevorzugt beim erfindungsgemäßen Verfahren einzusetzenden Aminopolyester und insbesondere Aminopolyether weisen im allgemeinen im statistischen Mittel pro Molekül 2—6, vorzugsweise 2—3 gegenüber Isocyanatgruppen reaktionsfähige Gruppen auf, die ihrerseits zumindest zu 50%, vorzugsweise zumindest zu 80% aus primären oder sekundären, vorzugsweise primären Aminogruppen bestehen, die, den obengemachten Ausführungen entsprechend, sowohl an aromatische als auch an aliphatische Kohlenstoffatome gebunden sein können. Das Molekulargewicht dieser bevorzugten Aminopolyester und insbesondere -polyether liegt im allgemeinen bei 1000 bis 7000, insbesondere bei 2.000 bis 6.000.

Bei der Komponente b) handelt es sich um Verbindungen der oben bereits unter b1) bis b4) genannten Art bzw. um b5) beliebige Gemische derartiger Verbindungen.

Geeignete Verbindungen b1) sind beliebige aromatische Di- oder Triamine des Molekulargewichtsbereichs 108 bis 499 mit primären oder sekundären, vorzugsweise mit primären Aminogruppen. In Betracht kommen beispielsweise gegebenenfalls alkylsubstituierte Phenylendiamine oder gegebenenfalls alkylsubstituierte Diaminodiphenylalkane, die an jedem aromatischen Ring eine vorzugsweise primäre Aminogruppe aufweisen, wie z.B. 1,2-, 1,3- oder 1,4-Diaminobenzol, 2,4- oder 2,6-Diaminotoluol, 2,4-Dimethyl-, 2,4-Diethyl-, 2,4-Diisopropyl- oder 2,4-Di-t-butyl-1,3-diaminobenzol, 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, beliebige technische Gemische der beiden letztgenannten Diamine, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 1-t-Butyl-3,5-dimethyl-2,6-diaminobenzol, 4,4'-Diaminodiphenylmethan, 4,4'-Diaminodiphenylpropan-2,2, 3,5'-Diisopropyl-3'-ethyl-4,4'-diaminodiphenylmethan, 3,3',5-Trimethyl-5'-isopropyl-, 3,3',5-Triethyl-5'-isopropyl, 3,3',5-Trimethyl-5'-sek.-butyl-, 3,3',5-Triethyl-5'-sek.-butyl-3,3'-5-Triethyl-5'-sek.-butylbutyl-4,4'-diaminodiphenylmethan, 3,3'-Diethyl-5,5'-diisopropyl, 3,3'-Dimethyl-5,5'-di-sek.-butyl, 3,3'-Dimethyl-5,5'-di-sek.-butyl-, 3,3'-Diethyl-5,5'-di-sek.-butyl-, 3,5-Dimethyl-3',5'-diisoproprpyl-, 3,5-Diethyl-3',5'-diisopropyl-, 3,5—Dimethyl-3',5-di-sek.-butyl-, 3,5'-Diethyl-3',5'-di-sek.-butyl-, 3-Methyl-3',5,5'-triisopropyl-, 3-Ethyl-3',5,5'-triisopropyl, 3-Methyl-3',5,5'-tri-sek.-butyl-, 3-Ethyl-3',5,5'-tri-sek.-butyl-, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3'5,5'-Tetraisopropyl- und/oder 3,3',5,5'-Tetra-sek.-butyl-4,4'-diaminodiphenylmethan. Die Herstellung solcher unsymmetrisch substituierter Tetraalkyldiphenylmethandiamine bzw. ihrer Produktgemische mit den symmetrisch substituierten Tetraalkyldiphenylmethandiaminen wird beispielsweise in der DE—A—29 20 501 beschrieben.

Es können auch Trialkyl-substituierte Diphenylmethandiamine eingesetzt werden, wie z.B. 3,5,3'-Triisopropyl- oder 3,5-Diisopropyl-3'-ethyl-4,4'-diaminodiphenylmethan oder auch disubstituierte Diamine wie 3,3'-Diisopropyl-4,4'-diamino-diphenylmethan, sowie analoge monosubstituierte Diamine. Gut geeignet sind Produktgemische von ca. 45 bis 70 Gew.-% 3,5-Diethyl-3',5'-diisopropyl-diphenylmethan-4,4'-diamin und 27,5 bis 15 Gew.-% 3,5,3',5'-Tetraethyl-diphenylmethan-4,4'-diamin und 27,5 bis 15 Gew.-% an 3,5,3',5'-Tetra-isopropyl-diphenylmethan-4,4'-diamin.

Weitere, als Komponente b1) geeignete aromatische Di- oder Triamine sind beispielsweise Tris-(4-aminophenyl)methan, 1,5-Diaminonaphthalin, flüssige Polyamingemische der Diphenylmethan-Reihe, wie sich durch Anilin/Formaldehyd-Kondensation erhalten werden, Heteroatome aufweisende aromatische Polyamine wie z.B. gegebenenfalls $C_1$—$C_{12}$-Alkylsubstituenten aufweisende 3,5-Diaminobenzoesäure-$C_1$—$C_{10}$-alkylester, 3,3'-Dichlor-4,4'-diaminodiphenylmethan oder 4,4'-Diaminodiphenylsulfid oder auch sekundäre Aminogruppen aufweisende Polyamine wie beispielsweise 4,4'-Di-(methylamino)-

## EP 0 204 141 B1

diphenylmethan. Grundsätzlich können beliebige Gemische der beispielhaft genannten Polyamine Verwendung finden.

Besonders bevorzugt werden bei Raumtemperatur flüssige, mit der Komponente a) gut mischbare diprimäre aromatische Diamine, insbesondere 1,3- und/oder 1,5-Diaminobenzole, eingesetzt, deren Molekulargewicht innerhalb des obengenannten Bereichs liegt, und die zumindest in jeweils einer ortho-Stellung zu den Aminogruppen eine Alkylsubstituenten aufweisen, insbesondere solche, die in ortho-Stellung zu der ersten Aminogruppe mindestens einen Alkylsubstituenten und in ortho-Stellung zur zweiten Aminogruppe zwei Alkylsubstituenten mit 1 bis 4, vorzugsweise 1 bis 3 Kohlenstoffatomen, die mit dem ersten Alkylsubstituenten nicht identisch sind, aufweisen, besonders bevorzugt solche, die in jeweils einer ortho-Stellung zu den Amingruppen einen Ethyl-, n-Propyl-Isopropyl- und/oder t.-Butyl-Substituenten und gegebenenfalls in weiteren ortho-Stellungen zu den Aminogruppen Methylsubstituenten aufweisen.

Als Komponente b2) kommen beliebige (cyclo)aliphatische Di- und/oder Triamine des Molekulargewichtsbereichs 60 bis 499 in Betracht wie z.B. 1,2-Diaminoethan, 1,2-Diaminopropan, 1,3-Diaminopropan, 1,4-Diaminobutan, 1,5-Diaminopentan, 1,6-Diaminohexan, 2,2,4-Trimethyl-1,6-diaminohexan, 1,7-Diaminoheptan, 1,8-Diaminooctan, 1,10-Diaminodecan, 1,11-Diaminoundecan, 1,12-Diaminododecan; oder Heteroatome aufweisende Diamine wie 1,5-Diamino-3-oxapentan, 1,8-Diamino-3,6-dioxaoctan, 1,11-Diamino-3,6,9-trioxaundecan, 1,13-Diamino-4,9-dioxatridecan, 1,9-Diamino-5-oxanonan, 5-Amino-2,2,4-trimethyl-1-cyclopentanmethylamin, 5-Amino-1-aminomethyl-1,3,3-trimethylcyclohexan (Isophorondiamin), 1,4-Diaminocyclohexan, 1,3-Diaminocyclohexan, 1,8-Diamino-p-menthan, 3-Aminoethyl-1-(3-aminopropyl-1-methyl)-4-methylcyclohexan, 1-Methyl-2,6-diaminocyclohexan, 1-Methyl-2,4-diaminocyclohexan, 4,4'-Diamino-dicyclohexylmethan, sowie seine 2,4'- bzw. 2,2'-Isomeren, 4,4'-Diamino-3,3'-dimethyldicyclohexylmethan sowie seine 2,4'- und 2,2'-Diamino-Isomeren, 4,4'-Diaminodicyclohexylethan, 4,4'-Diaminodicyclohexylether, Bis-(4'-aminocyclohexyl)-propan-(2,2), 4,4'-Diamino-dicyclohexan, 4,4'-Diamino-3,3'-diethyldicyclohexylmethan, 1,1-Di-(4'-aminocyclohexyl)-cyclohexan, 1,1-Di-(4'-amino-3'-methylcyclohexyl)-cyclohexan, 4,4'-Diamino-3,5-diethyl-3',5'-diisopropyldicyclohexylmethan, 4,4'-Diamino-3,3',5,5'-tetraethyl-dicyclohexylmethan; tertiäre Aminogruppen enthaltende Di- oder Polyamine, z.B. Bis-(3-aminopropyl)-methylamin, N,N'-Bis-(2-aminoethyl)-piperazin, N,N'-Bis-(3-aminopropyl)-piperazin; Diamine mit sekundären Aminogruppen, z.B. N-Methylethylendiamin, N,N'-Diethyl-ethylendiamin, N,N'-Dibutyl-hexamethylendiamin, Piperazin, 2,5-Dimethyl-piperazin, sowie N,N'-Diaminopiperazin. Gut geeignet als Komponente b2) sind auch niedermolekulare "Aminopolyether", die Homologe der unter a) beispielhaft genannten höhermolekularen Aminopolyether darstellen, jedoch ein unter 500 liegendes Molekulargewicht aufweisen. Es können aber auch Verbindungen mit 3 oder 4, sowie gegebenenfalls noch mehr primären und/oder sekundären Aminogruppen verwendet werden, z.B. 1,6,11-Triaminoundecan, 1,5-Diamino-3-aza-pentan, 1,8-Diamino-3,6-diaza-octan, 1,11-Diamino-3,6,9-triaza-undecan, 1,14-Diamino-3,6,9,12-tetraaza-tetradecan, 1,7-Diamino-4-aza-heptan, 1,11-Diamino-4,8-diaza-undecan, 1,13-Diamino-7-methyl-7-aza-tridecan, 1,3,5-Triaminocyclohexan. Ferner kommen Diamino-perhydroanthrazene (DE-Offenlegungsschrift 2 638 731) und cycloaliphatische Triamine gemäß DE-Offenlegungsschrift 2 614 244 in Betracht.

Zu den bevorzugten Ausgangskomponenten b2) gehören 1,6-Diaminohexan, sowie die beispielhaft genannten cycloaliphatischen Diamine.

Als erfindungsgemäß in Betracht kommende Ausgangskomponenten b3) sind beliebige Aminoalkohole des Molekulargewichtsbereichs 61 bis 499, die mindestens eine alkoholische Hydroxylgruppe und mindestens eine primäre oder sekundäre Aminogruppe aufweisen, geeignet. Beispiele hierfür sind 2-Aminoethanol, 2-Methyl-2-aminoethanol, 2-Ethyl-2-aminoethanol, 6-Methyl-3-oxa-6-aza-heptanol, 6-Hydroxyhexylamin, Bis-ß-hydroxyethyl-amin, Bis-(β-hydroxyethyl)-methylamin, Bis-(β-hydroxyethyl)-butylamin, Bis-(β-hydroxyethyl)-oleylamin, Bis-(β-hydroxypropyl)-amin, Bis-(β-hydroxypropyl)-methylamin, Bis-(β-hydroxypropyl)-hexylamin, N,N,N'-Tris-(β-hydroxypropyl)-ethylendiamin, 3-Aminomethyl-3,5,5-trimethylcyclohexanol, 2-Amino-2-hydroxymethyl-1,3-propandiol, 2-Amino-2-methyl-1,3-propandiol oder 2-Amino-2-methylpropanol, N-(β-hydroxyethyl)-ethylendiamin, N-(β-hydroxyethyl)-propylendiamin-1,2, N-(β-hydroxyethyl)-propandiamin-1,3, N-(β-hydroxyethyl)-hexandiamin-1,6-N-(β-hydroxyethyl)-dodecandiamin-1,12, N-(β-hydroxypropyl)-ethylendiamin, N-(β-hydroxypropyl)-propylendiamin-1,2, N-(β-hydroxypropyl)-propylendiamin-1,3, N-(β-hydroxybutyl)-ethylendiamin, N-(β-hydroxyethyl)-xylylendiamin-1,3, N-(β-hydroxyethyl)-cyclohexandiamin-1,3 oder -1,4, N-(β-hydroxyethyl)-2,2,4-trimethylhexylendiamin-1,6, 1-Methyl-2-amino-4-[N-(2-hydroxyethyl)-amino]-cyclohexan, N-(β-hydroxyethyl)-isophoron-diamin, N,N'-Bis-(β-hydroxyethyl)-ethylendiamin, N,N'-Bis-(β-hydroxypropyl)-ethylendiamin, N,N'-Bis-(β-hydroxyethyl)-propylendiamin-1,2, N,N'-Bis-(β-hydroxypropyl)-1-methyl-2,6- bzw. -2,4-diamino-cyclohexan, N,N'-Bis-(β-hydroxypropoxy)-p-xylylendiamin, N-(β-hydroxyethyl)-N'-(β-hydroxypropyl)-ethylendiamin, 1,3-Diamino-propanol-2, 1,6-Diamino-hexanol-2, 1,5-Diaminopentanol-3, 3,4-Diamino-2,2-dimethylbutanol-1, die Diaminocyclohexanole oder 1,11-Diaminoundecanol-6.

Als erfindungsgemäß in Betracht kommende Ausgangsmaterialien b4) sind beliebige, mindestens zweiwertige, gegebenenfalls Ether- oder Estergruppen aufweisende Alkohole des Molekulargewichtsbereichs 62 bis 499, die von den alkoholischen Hydroxylgruppen abgesehen, keine weiteren gegenüber Isocyanatgruppen reaktionsfähigen Gruppen aufweisen. Beispiele hierfür sind 1,2-Dihydroxyethan, 1,2-Dihydroxypropan, 1,4-Dihydroxybutan, 1,6-Dihydroxyhexan, Trimethylolpropan oder Glycerin. Diese Aufbaukomponenten b4) sind beim erfindungsgemäßen Verfahren allenfalls in Abmischung mit den oben beispielhaft genannten, Aminogruppen aufweisenden Verbindungen b1)—b3) geeignet.

Grundsätzlich können erfindungsgemäß beliebige Gemische der unter b1)—b4) beispielhaft genannten Verbindungen eingesetzt werden, vorausgesetzt, daß die gegenüber Isocyanatgruppen reaktionsfähigen Gruppen der Gesamtkomponente b) zumindest zu 50, vorzugsweise zumindest zu 80% aus primären und/oder sekundären aromatisch und/oder (cyclo)aliphatisch gebundenen Aminogruppen bestehen. Dies bedeutet, daß nicht nur im Falle der Verwendung zur zuletzt beispielhaft genannten mehrwertigen Alkohole b4), sondern gegebenenfalls auch im Falle der Verwendung der unter b3) beispielhaft genannten Aminoalkohole reine Polyamine der unter b1) und b2) beispielhaft genannten Art mitverwendet werden müssen, so daß die letztgenannte Bedingung erfüllt ist.

Grundsätzlich ist es auch möglich, als Komponente b) zumindest teilweise hydrazinische Aminogruppen aufweisende Aufbaukomponenten wie z.B. Carbodihydrazid, Oxalsäuredihydrazid, Malonsäure-, Bernsteinsäure-, Glutarsäure-, Adipinsäure- oder Sebacinsäure-bis-hydrazid einzusetzen. Die Verwendung bzw. Mitverwendung derartiger Hydrazinderivate ist jedoch weniger bevorzugt. Ganz besonders bevorzugt werden die unter b1) genannten beispielhaft genannten aromatischen Polyamine als alleinige Komponente b) beim erfindungsgemäßen Verfahren eingesetzt.

Die Herstellung der erfindungsgemäß zu verwendenden Polyisocyanat-Zubereitungen erfolgt vorzugsweise dergestalt, daß man zunächst durch Abmischen der Komponenten a) und b) die Komponente B) herstellt, die dann mit der Polyisocyanatkomponente A) unter Einhaltung eines Äquivalentverhältnisses von Isocyanatgruppen zu gegenüber Isocyanatgruppen reaktionsfähigen Gruppen von 2:1 bis 100:1, vorzugsweise 4:1 bis 50:1 innerhalb des Temperaturbereichs von 20 bis 140°C, vorzugsweise 20 bis 60°C zur Reaktion gebracht wird. Vorzugsweise wird dabei so vorgegangen, daß die Isocyanatkomponente A) vorgelegt und die NCO-reaktive Komponente B) unter Rühren kontinuierlich oder portionsweise zugegeben wird. Die Zugabegeschwindigkeit wird bevorzugt so gewählt, daß das Reaktionsgemisch nicht verquallt und rührbar bleibt. Bevorzugt wird die Zugabe der NCO-reaktiven Komponente zur Isocyanatkomponente bei 20 bis 30°C, bevorzugt ohne externe Kühlung oder Erwärmung, vorgenommen. Während der Zugabe steigt die Temperatur, wenn nicht extern gekühlt oder erwärmt wird, auf ca. 40—60°C.

Nach Beendingung der Umsetzung weist das Reaktionsgemisch, in Abhängigkeit von Art und Mengenverhältnissen der Reaktionspartner eine Viskosität von ca. 20 bis ca. 100.000, vorzugsweise von 100 bis 10.000 mPa · s/25°C auf. Ebenfalls in Abhängigkeit von Art und Mengenverhältnissen der Ausgangskomponenten handelt es sich bei den so erhaltenen Reaktionsmischungen um klare Lösungen oder auch um fein- oder grobdisperse System. Während die klaren Lösungen als solche der erfindungsgemäßen Verwendung zugeführt werden können, ist im Falle des Vorliegens von dispersen Systemen oftmals eine thermische Nachbehandlung angezeigt. Hierzu wird das fein- oder auch grobdisperse Reaktionsgemisch während des Zeitraums von 5 Minuten bis 10 Stunden, vorzugsweise 30 Minuten bis 6 Stunden bie 20 bis 140°C, vorzugsweise 60 bis 135°C und insbesondere 80 bis 130°C gerührt. Besonders geeignet ist eine Arbeitsweise, bei welcher die Temperatur währen der Nachbehandlung kontinuierlich oder stufenweise innerhalb der genannten Bereich erhöht wird. Bei dieser thermischen Nachbehandlung kommt es zur Auflösung von dispergierten Teilchen unter gleichzeitiger Viskositätsernìedrigung der Systeme. Es wird vermutet, daß hierbei eine chemische Überführung der zunächst vorliegenden harnstoffgruppen in Biuretgruppen durch Reaktion mit überschüssigen Isocyanatgruppen eine wesentliche Rolle spielt. Die thermische Nachbehandlung führt zu klaren oder extrem feindispersen Polyisocyanat-Zubereitungen, die ohne Schwierigkeiten der erfindungsgemäßen Verwendung zugeführt werden können. Die ohne thermische Nachbehandlung erhaltenen klaren Lösungen und auch die mit der thermischen Nachbehandlung erhaltenen klaren bzw. feindispersen Systeme weisen vorzugsweise einen NCO-Gehalt von 18 bis 28 Gew.-% und eine Viskosität bei 25°C von ca. 20 bis ca. 10.000 mPa · s auf.

Die erfindungsgemäß zu verwendenden Polyisocyanat-Zubereitungen können vorteilhafterweise, gegebenenfalls im Gemisch mit anderen Polyisocyanaten der aus der Polyurethanchemie an sich bekannten Art zur Herstellung von Kunststoffen auf Polyisocyanatbasis, insbesondere zur Herstellung von Harnstoff- und/oder Biuret-modifizierten Polyurethankunststoffen eingesetzt werden. Besonders vorteilhaft werden die erfindungsgemäß zu verwendenden Zubereitungen als Polyisocyanatkomponente bei der Herstellung von Formkunststoffen nach der "RIM-Technologie" verwendet und zwar sowohl zur Herstellung von harten, halbharten und weichen Integralschaumstoffen, als auch zur Herstellung der entsprechenden massiven, d.h. allenfalls mikrozellularen Formkörpern einer zwischen 0,8 und 1,4, vorzugsweise 0,9 bis 1,2 g/cm$^3$ liegenden Rodichte.

Bei dieser erfindungsgemäßen Verwendung kommen die erfindungsgemäß zu verwendenden Zubereitungen anstelle oder in Abmischung mit den hierzu üblicherweise eingesetzten Polyisocyanaten zum Einsatz. Dies bedeutet insbesondere, daß bei der erfindungsgemäßen Verwendung die Reaktionspartner und Hilfsstoffe für die erfindungsgemäß zu verwendenden Zubereitungen und auch die sonstigen Verfahrensparameter dem Stand der Technik entsprechen, wie er sich beispielsweise aus den Deutschen Offenlegungsschriften 1 953 637, 2 121 670, 2 356 692, 2 363 452, 2 404 310, 2 427 273, 2 431 968, 2 307 589, 2 319 648, 3 012 126 oder 3 147 736, den US-Patentschriften 4 065 410 oder 4 218 543 bzw. den offengelegten Europäischen Patentanmeldungen (Veröffentlichungsnummern) 17 928, 44 481 oder 81 701 ergibt.

Die erfindungsgemäß hergestellten Polyurethankunststoffe zeichnen sich durch ausgezeichnete mechanische Eigenschaften aus. Sie können grundsätzlich für die gleichen Anwendungsgebiete wie die Polyurethankunststoffe des Standes der Technik verwendet werden.

In den nachfolgenden Beispielen beziehen sich alle Prozentangaben auf Gewichtsprozente und alle Angaben in Teilen auf Gewichtsteile.

Beispiel 1

Ein Gemisch aus 1095 g 4,4'-Diisocyanatodiphenylmethan (MDI 44) und 2015 g eines Uretonimimmodifizierten 4,4'-Diisocyanatodiphenylmethan-Derivats (UI-MDI) des NCO-Gehalts 30% wird bei 30°C vorgelegt. Bei dieser Temperatur wird innerhalb 20 Min eine Mischung aus 800 g eines Polyoxypropylenglykols mit endständigen primären Aminogruppen des Molgewichts 2000 (®Jeffamine D 2000 der Texaco/Jefferson) und 42,6 g eines Gemischs aus 65 Teilen 1-Methyl-3,5-diethyl-2,4-diaminobenzol und 35 Teilen 1-Methyl-3,5-diethyl-2,6-diaminobenzol (DETDA) unter starkem Rühren zugegeben, wobei das Reaktionsgemisch sich stark trübt und Temperaturerhöhung auf ca. 55°C erfolgt. Innerhalb 3 h wird dann bis 125°C Innentemperatur erhitzt. Die Reaktionsmischung ist bei dieser Temperatur klar und bleibt dies auch beim Abkühlen auf Raumptemperatur. Die Viskosität beträgt 842 mPa · s/25°C, der NCO-Gehalt liegt bie 19,9%.

Beispiel 2

Bei 35°C wird eine Mischung aus 1385 g MDI 44 und 2501 g UI-MDI vorgelegt. Unter gutem Rühren wird innerhalb 30 Min eine Mischung aus 1085 g D 2000 und 57 g DETDA zugegeben. Die Suspension wird 3 h bei 80°C gerührt. Das bei RT trübe Produkt weist bei einer Viskosität von 1400 mPa · s/25°C einen NCO-Gehalt von 21,6% auf.

Beispiel 3

Der Ansatz aus Beispiel 2 wird nach dem 3-stündigen Rühren bei 80°C noch 3 h bei 120°C gerührt. Nach 2 h/120°C ist eine klare Lösung entstanden. Das bei RT klare Produkt weist bei einer Viskosität von 1040 mPa · s/25°C einen NCO-Gehalt von 21,5% auf.

Beispiel 4

Der Ansatz aus Beispiel 2 wird nach dem Zusammengeben der Komponenten 3 h bei 100°C gerührt. Das bei RT trübe Produkt, aus dem nichts abfiltriert werden kann, weist einen NCO-Wert von 21,5% und eine Viskosität von 585 mPa · s/25°C auf.

Beispiel 5

Vorgelegt wird bei 30°C ein Gemisch aus 252 g MDI 44 und 464 g UI-MDI. Bei einer Innentemperatur von 80—110°C (Temperaturerhöhung durch externes Heizen bewirkt) wird eine Mischung aus 190 g Jeffamine D 2000 und 19 g eines Gemisches aus ca. 50% 3,5-Diisopropyl-3',5'-diethyl-4,4'-diamino-diphenylmethan, ca. 25% 3,3',5,5'-Tetraethyl-4,4'-diamino-diphenylmethan und ca. 25% 3,3',5,5'-Tetraisopropyl-4,4'-diamino-diphenylmethan zugegeben. Dabei tritt sofortige starke Trübung des Reaktionsgemisches ein. Bei Erreichung einer Innentemperatur von 125°C tritt innerhalb 5 Min Klärung des Reaktionsgemisches ein. Der NCO-Wert des Produkts beträgt 21%.

Beispiel 6

Vorgelegt werden bei 40°C 357 g MDI 44. Zugetropft wird binnen 15 Min eine Mischung aus 285 g Jeffamine D 2000 und 19,4 g Jeffamine D 230 (Polyoxypropylenglykol mit endständigen primären Aminogruppen des Molekulargewichts 230) unter starkem Rühren. 3 h wird bei 120°C Innentemperatur nachgerührt. 330 g des Produkts mit einem NCO-Gehalt von 17,3% werden mit 328,5 g UI-MDI verdünnt. Das so resultierende Produkt hat einen NCO-Gehalt von 20,5% und eine Viskosität von 843 mPa · s/25°C.

Beispiel 7

Vorgelegt wird bei 60°C ein Gemisch aus 238 g MDI 44 und 438 g UI-MDI. Zugegeben wird innerhalb 15 Min eine Mischung aus 190 g Jeffamine D 2000 und 9,6 g Isophorondiamin. Dabei est Trübung und Auftreten von Gelkörpern zu beobachten. Nachdem 2 h auf 130°C erhitzt wurde, sind diese weitgehend verschwunden. Von nicht gelösten Teilchen wird abfiltriert, das Produkt hat einen NCO-Gehalt von 20,3%. Wird das Amingemisch bei 30°C zugegeben, treten keine Gelkörper auf.

Beispiel 8

Vorgelegt wird eine Mischung aus 238 g MDI 44 und 438 g UI-MDI. Bei einer Anfangsinnentemperatur von 60°C wird eine Mischung aus Jeffamine D 2000 (190 g) und 34 g Jeffamine D 400 (Polyoxypropylenglyckolether mit endständigen primären Aminogruppen des Molekulargewichts ca. 400). Es entsteht eine Suspension, die nach 1 h bei 120°C in Lösung geht. Das bei Raumtemperatur ebenfalls klare Produkt weist einen NCO-Gehalt von 19,6% auf, die Viskosität beträgt 720 mPa · s/25°C.

Beispiel 9

Wiederholt man Beispiel 8 mit der Maßgabe, daß anstelle der 34 g nur 17 g Jeffamine D 400 verwendet werden, so erhält man ein klares Produkt das NCO-Gehalts 20,5% und der Viskosität 537 mPa · s/25°C.

Beispiel 10

Vorgelegt wird bei 30°C eine Mischung aus 400 g MDI 44 und 68 g eines 1:1-Gemisches mit dem NCO-Gehalt 26,5% aus UI-MDI und einem Tripropylengkykol-modifizierten MDI des NCO-Gehaltes 23%. Unter Rühren wird bei RT eine Mischung aus 200 g Jeffamine D 2000 und 10 g DETDA zugegeben. Die erhaltene hochviskose Suspension wird auf 125°C erhitzt. Die trübe, jedoch nicht filtrierbare NCO-Zubereitung weist bei einem NCO-Gehalt von 20,9% eine Viskosität von 1790 mPa · s/25°C auf.

Beispiel 11

Bei RT wird eine Mischung aus 400 g MDI 44 und 260,6 g UI-MDI vorgelegt. Unter intensivem Rühren wird eine Mischung aus 190 g Jeffamine D 2000 und 10 g DETDA zugegeben. Die hochviskose Suspension wird auf 125°C erhitzt, worauf Klärung eintritt. Die bei Raumtemperatur wieder leicht trübe NCO-Zubereitung weist einen NCO-Gehalt von 21,4% und eine Viskosität von 860 mPa · 2/25°C auf.

Beispiel 12

Bei RT wird eine Mischung aus 238 g MDI 44 und 438 g UI-MDI vorgelegt. Unter intensivem Mischen wird eine Mischung aus 190 g eines aromatischen Aminopolyethers und 10 g DETDA langsam zugegeben und die entstandene Suspension während 45 Min unter Rühren auf 125°C erhitzt. Das bei RT klare Produkt weist bei 25°C eine Viskosität von 2830 mPa · s und einen NCO-Gehalt von 21,5% auf.

Der in diesem Beispiel verwendete Aminopolyether wurde gemäß DE—OS—31 31 252 durch Hydrolyse eine NCO-Prepolymeren des NCO-Gehalts 3,6% wie folgt hergestellt:

1 Mol eines Polyoxypropylenglykols des Molekulargewichts 2000 wird mit 2 Mol 2,4-Diisocyanatotoluol während 3 Stunden bei 80°C zur Umsetzung gebracht. Anschließend wird das so erhaltene NCO-Prepolymer bei 80°C mit wäßriger Kalilauge unter Bildung des entsprechenden Aminopolyethers mit aromatisch gebundenen Aminogruppen hydrolysiert. Der Aminopolyether weist eine NH-Zahl von 47,2 mg KOH/g auf.

Anwendungsbeispiele

Zur Herstellung von Formteilen wurde eine 1-Kolben-Hochdruckdosieranlage mit MQ-Mischkopf (Maschinenfabriken Hennecke, St. Augustin) und Zwangssteuerung verwendet. Der Betriebsdruck betrug 200 bar.

Die in den nachstehenden Beispielen 13 und 14 genannten Polyol- und Isocyanat-Komponenten werden unter Verwendung dieser Apparatur innig miteinander vermischt und zu Formkunststoffen der in den Beispielen genannten mechanischen Eigenschaften verarbeitet. Die Rostofftemperatur betrug hierbei 35—40°C, die Formtemperatur lag bei 60°C, als Form wurde eine solche aus poliertem Stahl der Innenabmessungen 200×300×4 mm verwendet, deren Innenwände mit einem äußeren Trennmittel auf Wachsbasis (®Acmos Fluoricon 36/34 der Firma Acmos) beschichtet waren. Die Einfüllzeit betrug ca. 2 Sekunden (Beispiel 13) bzw. ca 1,25 Sekunden (Beispiel 14); die Standzeit lag bei ca. 30 Sekunden (Beispiel 13) bzw. bei ca. 60 Sekunden (Beispiel 14).

Beispiel 13

Polyolkomponente:

78 Teile eines Polyethertriols der oH-Zahl 28, erhalten durch Propoxylierung von Trimethylolpropan und anschließende Ethoxylierung des Propoxylierungsprodukts (PO:EO-Gew.-Verhältnis=78:22),

19,6 Teile Ethylenglykol,

1,7 Teile eines Gemischs aus 75 Teilen des obengenannten Polyethertriols und 25 Teilen Zinkstearat,

0,025 Teile eines handelsüblichen Zinnkatalysators (Zinnkatalysator UL 28 der Firma Witco Co.),

0,5 Teile Triethylendiamin.

Polyisocyanatkomponente

150,7 Teile der Polyisocyanatzubereitung aus Beispiel 1

Isocyanatkennzahl: 105

Mechanische Daten

Raumgewicht (DIN 53 420): 1119 kg/m$^3$

Zugfestigkeit (DIN 53 504) (RT): 28,2±0,95 MPa

Bruchdehnung (DIN 53 504) (RT): 76±6%

Wieterreißfestigkeit (DIN 53 515) (RT): 68±0,15 KN/m

sag-Test (General Motors-Prüfmethode, 100 mm Überhang, 1 h 120°C): 8,2 mm

Shore D (DIN 53 505): 62

ISO R 75/B-Test: 74°C

Zugspannung 50% (DIN 53 504) (RT): 24,9±0,22 MPa
Biege-E-Modul (ASTM D-790) bei RT: 470,1 MPa
bei 120°C: 36,2 MPa

Beispiel 14
Polyolkomponente

77 Teile eines Aminopolyethers der NH-Zahl 46 (mg KOH/g), hergestellt durch basische Hydrolyse eines NCO-Prepolymeren, welches durch Umsetzung von 2,4-Diisocyanatotoluol mit einem Polyolgemisch im NCO/OH-Äquivalentverhältnis von 2:1 hergestellt worden ist, wobei es sich bei dem Polyolgemisch um ein Gemisch aus gleichen Gewichtsteilen von a) einem Polyetherpolyol der OH-Zahl 35, hergestellt durch Propoxylierung von Glycerin und anschließende Ethoxylierung des Propoxylierungsprodukts (PO:EO-Gewichtsverhältnis=92:8) und b) einem Polyetherpolyol der OH-Zahl 56, hergestellt durch Propoxylierung eines Gemischs aus einem Teil Trimethylolpropan und einem Teil Wasser, handelt:

23 Teile DETDA (vgl. Beispiel 1):
0,3 Teile Triethylendiamin
0,2 Teile Zinnkatalysator gemäß Beispiel 13

Polyisocyanatkomponente
69 Teile der Polyisocyanatzubereitung gemäß Beispiel 1

Isocyanatkennzahl: 105
Mechanische Daten
Raumgewicht (DIN 53 420): 1132 kg/m$^3$
Zugfestigkeit (DIN 53 504) (RT): 38,1±3,46 MPa
Bruchdehnung (DIN 53 504) (RT): 162±18%
Weiterreißfestigkeit (DIN 53 515) (RT): 80,0±1,69 KN/m
sag-Test (General Motors-Prüfmethode, 100 mm Überhang, 30 min, 160°C): 9,6 mm
Shore D (DIN 53 505): 70
ISO R 75/B-Test: 123°C
Zugspannung 50% (DIN 53 504) (RT): 25,8±0,19 MPa
Biege-E-Modul (ASTM D-790) bei RT: 581,1
bei 120°C: 242,7
Faktor-E-Modul: 2,39

**Patentansprüche**

1. Verwendung von harnstoff- und/oder Biuretgruppen aufweisenden Polyisocyanat-Zubereitungen mit einem NCO-Gehalt von 0,7 bis 45 Gew.-%, die durch Umsetzung von

A) organischen Polyisocyanaten mit einem NCO-Gehalt von 10 bis 50 Gew.-% oder Gemischen von organischen Polyisocyanaten mit einem NCO-Gehalt von 10 bis 50 Gew.-% mit

B) organischen Verbindungen mit gegenüber Isocyanatgruppen reaktionsfähigen Gruppen unter Einhaltung eines Äquivalentverhältnisses von Isocyanatgruppen der Komponente A) zu gegenüber Isocyanatgruppen reaktionsfähigen Gruppen der Komponente B) von 2:1 bis 100:1 hergestellt worden sind, wobei als Komponente B) Gemisch aus

a) organischen Verbindungen des (mittleren) Molekulargewichts von 500 bis 20.000 mit mindestens 2 gegenüber Isocyanatgruppen reaktionsfähigen Gruppen mit

b) organischen Verbindungen des Molekulargewichtsbereichs 60 bis 499 mit mindestens zwei gegenüber Isocyanatgruppen reaktionsfähigen Gruppen unter Einhaltung eines Äquivalentverhältnisses, bezogen auf die gegenüber Isocyanatgruppen reaktionsfähigen Gruppen, von a):b)=100:1 bis 0,1:1 verwendet worden sind,

wobei die Komponente a) aus im Sinne der Isocyanat-Additionsreaktion mindestens difunktionellen Polyethern oder Polyestern des Molekulargewichtsbereichs 500 bis 20.000 mit alkoholischen, an primäre und/oder sekundäre Kohlenstoffatome gebundenen Hydroxylgruppen und/oder mit aromatisch und/oder (cyclo)aliphatisch gebundenen, primären und/oder sekundären Aminogruppen oder aus Gemischen derartiger Verbindungen besteht, und

wobei die Komponente b) ausgewählt worden ist aus der Gruppe bestehend aus

b1) aromatischen Di- oder Triaminen des Molekulargewichts 108 bis 499 mit primären oder sekundären Aminogruppen,

b2) (cyclo)aliphatischen Di- und/oder Triaminen des Molekulargewichtsbereichs 60 bis 499 mit primären und/oder sekundären Aminogruppen,

b3) organischen Verbindungen des Molekulargewichtsbereichs 61 bis 499, die im Sinne der Isocyanat-Additionsreaktion mindestens difunktionell sind und die sowohl (i) mindestens eine aromatisch und/oder (cyclo)aliphatisch gebundene primäre und/oder sekundäre Aminogruppe, als auch (ii) mindestens eine alkoholische, an ein primäres oder sekundäres Kohlenstoffatom gebundene Hydroxylgruppe aufweisen,

b4) mindestens zweiwertigen, gegebenenfalls Ether- oder Estergruppen aufweisenden Alkohlen des Molekulargewichtsbereichs 60 bis 499 und

b5) Gemischen der Verbindungen b1) bis b4),

mit der Maßgabe, daß mindestens 25% der in den Komponenten a) und b) vorliegenden, gegenüber Isocyanatgruppen reaktionsfähigen Gruppen primäre oder sekundäre Aminogruppen darstellen, als Isocyanatkomponente bei der Herstellung von Formkunststoffen auf Basis von Polyisocyanat-Additionsprodukten einer Dichte von 0,8 bis 1,4 g/cm³ nach der Reaktionspritzgußtechnik.

2. Verwendung gemäß Anspruch 1, dadurch gekennzeichnet, daß als Komponente A) gegebenenfalls Urethan-, Carbodiimid-, und/oder Uretonimingruppen aufweisende, bei Raumtemperatur flüssige Polyisocyanate oder Polyisocyanatgemische der Diphenylmethanreihe mit einem NCO-Gehalt von 20 bis 32% verwendet worden sind.

3. Verwendung gemäß Anspruch 1 und 2, dadurch gekennzeichnet, daß als Komponente a) im Sinne der Isocyanat-Additionsreaktion mindestens difunktionelle Polyether des Molekulargewichts 1.000 bis 7.000 verwendet worden sind, deren gegenüber Isocyanatgruppen reaktionsfähige Gruppen zu mindestens 50% aus aromatisch und/oder (cyclo)aliphatisch gebundenen primären Aminogruppen bestehen.

4. Verwendung gemäß Anspruch 1 bis 3, dadurch gekennzeichnet, daß als Komponente b) ausschließlich aromatische Diamine verwendet worden sind, die in mindestens jeweils einer ortho-Stellung zu den Aminogruppen Alkylsubstituenten mit 1 bis 4 Kohlenstoffatomen aufweisen.

5. Verwendung gemäß Anspruch 1 bis 4, dadurch gekennzeichnet, daß Art und Mengenverhältnisse der Komponenten a) und b) so gewählt worden sind, daß die in diesen Komponenten vorliegenden, gegenüber Isocyanatgruppen reaktionsfähigen Gruppen zu mindestens 75% aus primären Aminogruppen bestehen.

6. Verwendung gemäß Anspruch 1 bis 5, dadurch gekennzeichnet, daß die Komponenten A) und B) in solchen Mengen miteinander umgesetzt worden sind, daß das Äquivalentverhältnis von Isocyanatgruppen zu gegenüber Isocyanatgruppen reaktionsfähigen Gruppen bei 4:1 bis 50:1 liegt.

7. Verwendung gemäß Anspruch 6, dadurch gekennzeichnet, daß die Umsetzung zwischen den Komponenten A) und B) innerhalb des Temperaturbereichs von 20°C bis 140°C durchgeführt worden ist.

**Revendications**

1. Utilisation de préparations de polyisocyanates présentant des groupes urée et/ou biuret, avec une teneur en NCO de 0,7 à 45% en poids, qui ont été obtenues en faisant réagir:

A) des polyisocyanates organiques avec une teneur en NCO de 10 à 50% en poids ou des mélanges de polyisocyanates organiques avec une teneur en NCO de 10 à 50% en poids avec

B) des composés organiques avec des groupes pouvant réagir avec les groupes isocyanate

en maintenant en rapport des équivalents des groupes isocyanate des composants A) vis-à-vis des groupes réactifs avec les groupes isocyanate des composants B) dans la plage allant de 2:1 à 100:1, dans lequel les composants B) sont des mélanges de

a) composés organiques de poids moléculaire moyen dans la plage allant de 500 à 20.000, avec au moins 2 groupes pouvant réagir avec les groupes isocyanate

b) composés organiques ayant un poids moléculaire dans la plage allant de 60 à 499, avec au moins 2 groupes pouvant réagir avec les groupes isocyanate en maintenant un rapport équivalent rapporté aux groupes pouvant réagir avec les groupes isocyanate de a):b)=100:1 à 0,1:1,

tandis que les composants a) sont constitués de polyéthers ou de polyesters au moins bifonctionnels au sens de la réaction d'addition des isocyanates, ayant un poids moléculaire dans la plage allant de 500 à 20.000, comportant des groupes hydroxyle alcooliques fixés à des atomes de carbone primaires et/ou secondaires et/ou comportant des groupes amino primaires et/ou secondaires liés à des fragments aromatiques et/ou (cyclo)aliphatiques ou de mélanges de ces composés, et

où les composants b) sont choisis dans le groupe constitué de

b1) les di- ou triamines de poids moléculaire dans la plage allant de 108 à 499 avec des groupes amino primaires ou secondaires,

b2) des di- et/ou des triamines (cyclo)aliphatiques dont le poids moléculaire se situe dans la plage allant de 60 à 499, avec des groupes amino primaires et/ou secondaires,

b3) des composés organiques de poids moléculaires dans la plage allant de 61 à 499, qui sont au moins bifonctionnels au sens de la réaction d'addition des isocyanates et qui présentent d'une part (i) au moins un groupe amino primaire et/ou secondaire lié à un fragment aromatique et/ou (cyclo)aliphatique ainsi que (ii) au moins un groupe hydroxyle alcoolique lié à un atome de carbone primaire ou secondaire,

b4) des alcools au moins bivalents présentant éventuellement des groupes éther ou ester et ayant un poids moléculaire dans l'intervalle allant de 60 à 499, et

b5) des mélanges des composés b1) à b4),

avec la condition qu'au moins 25% des groupes pouvant réagir avec les groupes isocyanate et existant dans les composants a) et b) constituent des groupes amino primaires ou secondaires, comme composants d'isocyanates pour la production de matières plastiques de moulage à base de produits d'addition de polyisocyanates ayant une densité de 0,8 à 1,4 g/cm³ produits suivant la technique de moulage sous pression avec réaction.

2. Utilisation selon la revendication 1, caractérisée en ce que l'on utilise comme composants A) des polyisocyanates liquides à température ambiante ou des mélanges de polyisocyanates présentant éventuellement des groupes uréthane, carbodiimide et/ou urétonimine et appartenant à la série du diphénylméthane avec une teneur en NCO de 20 à 32%.

3. Utilisation selon les revendication 1 et 2, caractérisée en ce que l'on utilise comme composants a) des polyéthers au moins bifonctionnels au sens de la réaction d'addition des isocyanates, dont le poids moléculaire se situe dans la plage de 1000 à 7000 et dont les groupes pouvant réagir avec les groupes isocyanate sont constitués d'au moins 50% de groupes amino primaires liés à des radicaux ou fragments aromatiques et/ou (cyclo)aliphatiques.

4. Utilisation selon les revendications 1 à 3, caractérisée en ce que l'on utilise comme composants b) exclusivement des diamines aromatiques qui présentent des substituants alkyle avec 1 à 4 atomes de carbone au moins en position ortho par rapport aux groupes amino.

5. Utilisation selon les revendications 1 à 4, caractérisée en ce que la nature et les proportions pondérales des composants A) et B) sont choisis de façon à ce que les groupes pouvant réagir avec les isocyanates et existant dans ces composants soient constitués à raison d'au moins 75% de groupes amino primaires.

6. Utilisation selon les revendications 1 à 5, caractérisée en ce que les composants A) et B) réagissent ensemble dans des proportions telles que le rapport entre les équivalents des groupes isocyanate et des groupes capables de réagir avec les groupes isocyanate se situe dans l'intervalle allant de 4:1 et 50:1.

7. Utilisation selon la revendication 6, caractérisée en ce que la réaction entre les composants A) et B) est réalisée dans la gamme de températures de 20°C à 140°C.

**Claims**

1. The use of polyisocyanate preparations containing urea and/or biuret groups and having an NCO content of 0.7 to 45% by weight, which have been obtained by reaction of

A) organic polyisocyanates having an NCO content of 10 to 50% by weight or mixtures of organic polyisocyanates having an NCO content of 10 to 50% by weight with

B) organic compounds containing isocyanate-reactive groups,

an equivalent ratio of isocyanate groups of component A) to isocyanate-reactive groups of component B) of 2:1 to 100:1 being maintained during the reaction, component B) consisting of mixtures of

a) organic compounds having an (average) molecular weight of 500 to 20,000 and containing at least two isocyanate-reactive groups with

b) organic compounds having a molecular weight in the range from 60 to 499 and containing at least two isocyanate-reactive groups, an equivalent ratio—based on the isocyanate-reactive groups— of a):b) of 100:1 to 0.1:1—being maintained,

component a) consisting of polyethers or polyesters which are at least difunctional in the context of the isocyanate addition reaction and have a molecular weight in the range from 500 to 20,000 and which contain alcoholic hydroxyl groups attached to primary and/or secondary carbon atoms and/or aromatically and/or (cyclo)aliphatically bound, primary and/or secondary amino groups or of mixtures of such compounds, and

component b) having been selected from the group consisting of

b1) aromatic di- or triamines having a molecular weight in the range from 108 to 499 and containing primary or secondary amino groups,

b2) (cyclo)aliphatic di- and/or triamines having a molecular weight in the range from 60 to 499 and containing primary and/or secondary amino groups,

b3) organic compounds having a molecular weight in the range from 61 to 499 which are at least difunctional in the content of the isocyanate addition reaction and which contain both (i) at least one aromatically and/or (cyclo)aliphatically bound primary and/or secondary amino group and (ii) at least one alcoholic hydroxyl group attached to a primary or secondary carbon atom,

b4) at least dihydric alcohols optionally containing ether or ester groups and having a molecular weight in the range from 60 to 499 and

b5) mixtures of the compounds b1) to b4),

with the proviso that at least 25% of the isocyanate-reactive groups present in components a) and b) are primary or secondary amino groups,

as isocyanate component in the production of moulded plastics based on polyisocyanate addition products having a density of 0.8 to 1.4 g/cm$^3$ by reaction injection moulding.

2. The use as claimed in claim 1, characterized in that polyisocyanates or polyisocyanate mixtures of the diphenylmethane series with an NCO content of 20 to 32%, which are liquid at room temperature and optionally contain urethane, carbodiimide and/or uretoneimine groups, are used as component A).

3. The use claimed in claims 1 and 2, characterized in that polyethers with a molecular weight of 1,000 to 7,000 which are at least difunctional in the context of the isocyanate addition reaction and in which at least 50% of the isocyanate-reactive groups consist of aromatically and/or (cyclo)aliphatically bound primary amino groups are used as component a).

4. The use claimed in claims 1 to 3, characterized in that aromatic diamines bearing $C_{1-4}$ alkyl

12

substituents in at least one ortho position to the amino groups are exclusively used as component b).

5. The use claimed in claims 1 to 4, characterized in that the components a) and b) and the quantities in which they are used are selected so that at least 75% of the isocyanate-reactive groups present in these components consist of primary amino groups.

6. The use claimed in claims 1 to 5, characterized in that components A) and B) are reacted with one another in such quantities that the equivalent ratio of isocyanate groups to isocyanate-reactive groups is from 4:1 to 50:1.

7. The use claimed in claim 6, characterized in that the reaction between components A) and B) is carried out at a temperature in the range from 20 to 140°C.